(19) Europäisches Patentamt
European Patent Office
Office européen des brevets

(11) Veröffentlichungsnummer: **0 253 196**
**A2**

# (12) EUROPÄISCHE PATENTANMELDUNG

(21) Anmeldenummer: **87109362.1**

(51) Int. Cl.[4]: **C08G 63/68** , C08G 75/20

(22) Anmeldetag: **30.06.87**

(30) Priorität: **11.07.86 DE 3623319**

(43) Veröffentlichungstag der Anmeldung:
**20.01.88 Patentblatt 88/03**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Volker, Eckhardt,Dr.**
**Bodelschwinghstrasse 14**
**D-4150 Krefeld(DE)**
Erfinder: **Dicke, Hans-Rudolf, Dr.**
**Bodelschwinghstrasse 16**
**D-4150 Krefeld(DE)**
Erfinder: **Bottenbruch, Ludwig, Dr.**
**Wöhlerstrasse 5**
**D-4150 Krefeld(DE)**

## (54) Thermotrope aromatische Polyester/Polysulfon-Blockcokondensate, Verfahren zu ihrer Herstellung und ihre Verwendung zur Herstellung von Fasern, Folien und Formkörpern.

(57) Thermotrope Polyester/Polysulfon-Blockkondensate eignen sich zur Herstellung von Fasern, Folien und Formkörpern mit hervorragenden mechanischen Eigenschaften.

EP 0 253 196 A2

Xerox Copy Centre

# Thermotrope aromatische Polyester/Polysulfon-Blockcokondensate, Verfahren zu ihrer Herstellung und ihre Verwendung zur Herstellung von Fasern, Folien und Formkörpern

Die Erfindung betrifft hochmolekulare thermotrope aromatische Polyester/Polysulfon-Blockcokondendate, ein Verfahren zu ihrer Herstellung und ihre Verwendung zur Herstellung von Fasern, Folien und Formkörpern, z.B. auch als Modifikatoren für Mischungen aus thermotropen Polyestern und Polysulfonen.

Eine große Zahl unterschiedlicher Blockcopolymere wurde schon synthetisiert (eine Übersicht findet sich z.B. in B.A. Noshay/J.E. McGrath, "Block Copolymers", Academic Press, New York 1977). Einige Produkte werden kommerziell genutzt. Bisher unbekannt blieben jedoch Blockcokondensate, die zur Ausbildung thermotrop flüssigkristalliner Phasen befähigte Blöcke enthalten.

Als "thermotrop" bezeichnet man solche Substanzen, die flüssigkristalline Schmelzen bilden. Thermotrope Polykondensate sind hinreichend bekannt, vgl. z.B.

F.E. McFarlane et al., Liquid Crystal Polymers II, Contemporary Topics in Polymer Science, Vol. 2, Plenum Publishing Corporation, 1977;

W.J. Jackson und H.F. Kuhfuss, J. Polymer Science, Polymer Chem. Ed. 14, 2042 (1976);

W.C. Wooten et al. in A. Ciferri, "Ultra-high Modulus Polymers", Applied Science Publ., London 1979, S. 362 f.;

A. Blumstein et al., "Liquid Crystalline Order in Polymers", Academic Press, 1978;

J. Preston, Angew. Makromol. Chem. 109/110, S. 1 - 19 (1982);

A. Ciferri, W.R. Krigbaum, R.B. Meyer "Polymer Liquid Crystals", Academic Press, New York, 1982;

EP 1185, 1340, 8855, 11 640, 15 856, 17 319, 18 145, 18 709, 22 344, 44 205, 49 615, 131 846 , 132 637, 134 956, 134 959, 141 320, 165 399;

US 3 991 013, 3 991 014, 4 066 620, 4 067 852, 4 083 829, 4 107 143;

WO 79/797, 79/1030, 79/1040.

Der flüssigkristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicol'schen Prismen in Abwesenheit einer Materialprobe auf 100 Skalenteile eingestellt. Bei gekreuzten Nicol'schen Prismen ergab sich dann ein Wert von 0,01 Skalenteilen.

Die Schichtdicke der untersuchten Polykondensatschmelzen betrug 100 µm.

Die Untersuchung der Polykondensate erfolgte nach dem Aufschmelzen der Proben bei Temperaturen zwischen 280 und 400°C. Sofern in diesem gesamten Bereich oder in einem Teil davon eine Aufhellung der zwischen den gekreuzten Nicol'schen Prismen beobachteten Schmelze auftrat, wurde das Polykondensat als thermotrop flüssigkristallin eingestuft.

Die flüssigkristallinen Polykondensate zeigen in der Meßanordnung Werte über 1 Skalenteil, meist Werte von 3-90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto 1974, beschrieben ist.

Durch Verspinnen thermotroper Polyester aus der Schmelze sind Fasern herstellbar, die in ihren mechanischen Eigenschaften den bekannten Textilfasern weit überlegen sind. Auch Folien und Formkörper mit außergewöhnlicher Festigkeit und Steifigkeit sind durch thermoplastische Verformung dieser Polyester zugänglich.

Konventionelle thermoplastische Konstruktionswerkstoffe zeichnen sich durch ein unproblematischeres Verarbeitungsverhalten, hohe Wärmeformbeständigkeit und Zähigkeit sowie vielfach durch hohe hydrolytische Beständigkeit, hohe Reißdehnung und ein günstiges Kriechverhalten aus. Die Festigkeit und Steifigkeit dieser Werkstoffe ist für anspruchsvolle Anwendungen jedoch häufig zu gering.

Man war in diesen Fällen bisher darauf angewiesen, Defizite in den mechanischen Eigenschaften durch Einarbeiten hochfester mineralischer oder organischer Fasern, wie z.B. Glasfasern und Kohlenstoffasern, zu kompensieren. Leider bringt die Verwendung derartiger Verstärkungsfasern auch eine Reihe von Nachteilen mit sich: ein erhöhter Verschleiß der Verarbeitungsaggregate, das höhere spezifische Gewicht verstärkter Thermoplaste sowie oft eine verschlechterte Flammwidrigkeit.

Gegegenstand der Erfindung sind thermotrope aromatische Polyester/Polysulfon-Blockkondensate der Formeln
$(A-B)_a A_b$ (I) oder $(B-A)_a B_b$ (II),
wobei a eine ganze Zahl zwischen 1 und 1000 und b entweder 0 oder 1 ist, mit der Maßgabe, daß die Blöcke A und B chemisch miteinander verknüpft sind und im Verhältnis A/B von 1 : 99 bis 99 : 1 vorliegen, und A ein thermotroper aromatischer Polyesterblock, bestehend aus wiederkehrenden Einheiten der Formeln

$$-\overset{O}{\overset{\|}{C}}-Ar^1-O- \quad (III)$$

und/oder

$$-\overset{O}{\overset{\|}{C}}-Ar^2-\overset{O}{\overset{\|}{C}}-O-Ar^3-O- \quad (IV)$$

ist, worin $Ar^1$, $Ar^2$ und $Ar^3$ 6 - 18 C-Atome enthaltende bivalente aromatische Reste, deren kettenverlängernde Bindungen zu 50 - 100 Mol-% coaxial oder parallel entgegengesetzt und zu 0 - 50 Mol-% gewinkelt sind und die durch $C_1$-$C_4$-Alkoxygruppen oder Halogenatome substituiert sein können, darstellen und
B ein Polysulfonblock, bestehend aus wiederkehrenden Einheiten der Formel

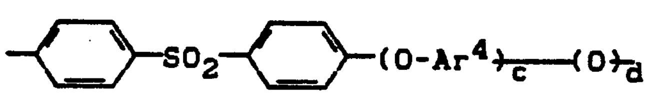

(V)

ist, worin $Ar^4$ ein aus einem oder mehreren, ggf. durch Alkylidengruppen oder Heteroatome verbrückten aromatischen Ringen bestehender bivalenter Rest ist, c und d unabhängig voneinander 0 oder 1 sind, mit der Maßgabe, daß die Blöcke B vor Einbau in das Blockcokondensat eine oder zwei Hydroxylendgruppen tragen.

Bevorzugte Hydroxycarbonsäuren, die zu wiederkehrenden Einheiten der Formel III führen, sind beispielsweise 4-Hydroxybenzoesäure, 4-Hydroxy-4'-carboxybiphenyl, 2-Hydroxynaphthalin-6-carbonsäure, 1-Hydroxynaphtalin-4-carbonsäure, 1-Hydroxynaphthalin-5-carbonsäure, 3-Hydroxybenzoesäure, 4-Hydroxy-2-methylbenzoesäure, 4-Hydroxy-3-methylbenzoesäure, 4-Hydroxy-2-ethylbenzoesäure, 4-Hydroxy-3-ethylbenzoesäure, 4-Hydroxy-3-phenylbenzoesäure, 4-Hydroxy-2-phenylbenzoesäure oder 3-Chlor-4-hydroxybenzoesäure.

Bevorzugte Dicarbonsäuren bzw. Diphenole, die zu wiederkehrenden Einheiten der Formel IV führen, sind z. B. Terephthalsäure, Isophthalsäure, 4,4'-Biphenyldicarbonsäure, 4,4'-Terphenyldicarbonsäure, 2,6-Napthalindicarbonsäure, 1,4-Naphthalindicarbonsäure, 1,5-Naphthalindicarbonsäure, 2,7-Napthalindicarbonsäure, Azobenzoldicarbonsäure, Stilbendicarbonsäure, 4,4'-Diphenyletherdicarbonsäure, 3,4'-Diphenyletherdicarbonsäure, 4,4'-Benzophenondicarbonsäure, 3,4'-Benzophenondicarbonsäure, Methylterephthalsäure, Ethylterephthalsäure, Phenylterephthalsäure, Chlorterephthalsäure bzw. Hydrochinon, Resorcin, 4,4'-Dihydroxydiphenyl, 2,6-Naphthalindiol, 1,4-Naphthalindiol, 1,5-Naphthalindiol, 2,7-Naphthalindiol, 4,4'-Dihydroxystilben, 4,4'-Dihydroxydiphenylsulfon, 4,4'-Dihydroxybenzophenon,3,4'-Dihydroxybenzophenon, 4,4'-Dihydroxydiphenylether, 3,4'-Dihydroxydiphenylether, Bisphenol A, o,o,o',o'-Tetramethyl-, -chlor-und -brombisphenol A und 4,4'-Dihydroxydiphenylsulfid.

Die Polyesterblöcke A können bis zu 35 Mol-% Carbonatgruppen oder bis zu 40 Mol-% Ethylenglykoleinheiten, jeweils bezogen auf die Summe von Ester-und Carbonatgruppen, enthalten.

Die Polyesterblöcke A können die wiederkehrenden Einheiten der Formeln III und IV in statistischer Verteilung, in Segmenten oder blockartig angeordnet enthalten.

Zum Aufbau der Polyesterblöcke A können auch verzweigte drei-oder höherfunktionelle - vorzugsweise aromatische - Monomere in Mengen von 0,1 - 1 Mol-%, bezogen auf die Summe der Reste III und IV, wie z.B. Phloroglucin, 1,3,5-Benzoltricarbonsäure und 3,5-Dihydroxybenzoesäure, eingesetzt werden.

Eine Zusammenstellung von für die Blöcke A geeigneten thermotropen Polyestern findet sich z.B. in Übersichtsartikeln von W.J. Jackson (British Polymer Journal, December 1980, S. 154 - 62) oder von M.G. Dobb und J.E. McIntyre (Advances in Polymer Science 60/61, Berlin 1984, S. 63 - 96).

Besonders bevorzugte Zusammensetzungen zum Aufbau der Polyesterblöcke A enthalten

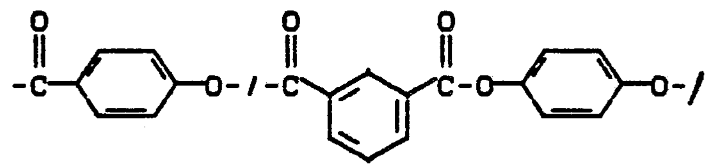

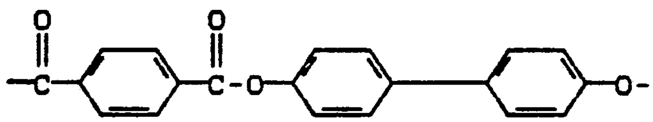

oder

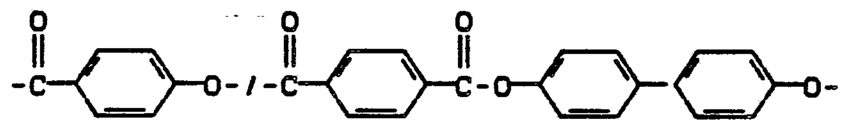

als wiederkehrende Einheiten der Formeln III und IV bzw.

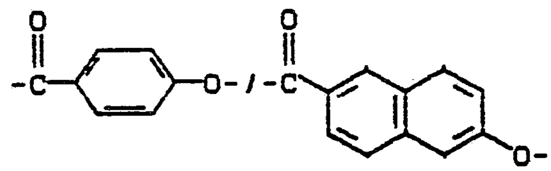

als wiederkehrende Einheiten der Formel III.

Bevorzugte aromatische Reste $Ar^4$ in den Polysulfonblöcken der Formel V sind z.B. Bis-2,2'-(4-phenylen)-propan, 4,4'-Diphenylensulfon, 1,4-Phenylen, 4,4-Biphenylen, 4,4'-Diphenylenoxid, 4,4'-Diphenylenketon, 2,6-Naphtylen. Besonders bevorzugte Polysulfonblöcke der Formel V besitzen die Struktur

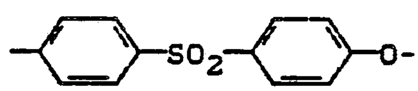 (V a)

oder

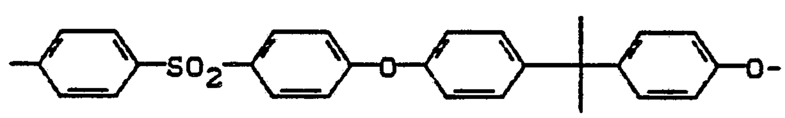 (V b)

Die Molekulargewichte bevorzugter Polysulfonblöcke der Formel V liegen zwischen 500 und 100 000. Besonders be vorzugt ist der Molekulargewichtsbereich zwischen 1000 und 20 000.

Die Polysulfonblöcke V tragen eine oder zwei phenolische Hydroxylendgruppen.

Die Herstellung der Polysulfonblöcke erfolgt vorzugsweise über die literaturbekannte Polyetherreaktion, bei der entweder 4-Halogen-4'-metallatodiarylsulfone zur Reaktion gebracht oder 4,4'-Dihalogendiarylsulfone mit 4,4'-Bismetallatoderivaten aromatischer Verbindungen umgesetzt werden. Besonders bevorzugt ist die letztgenannte Variante, bei der durch Wahl eines geeigneten Überschusses des Derivates der aromatischen Dihydroxyverbindungen dihydroxylterminierte Polysulfonblöcke mit genau einstellbarem Molekulargewicht synthetisiert werden können. Die Reaktion wird dabei zweckmäßigerweise durch Umsetzung einer aromatischen 4,4'-Dichlorsulfonverbindung, wie z.B. 4,4'-Dichlordiphenylsulfon, mit einem entsprechend dem

gewünschten Molekulargewicht berechneten Überschuß eines Bisphenols unter Zusatz molarer Mengen $K_2CO_3$ in dipolar aprotischen Lösungsmitteln, wie z.B. DMSO oder NMP ausgeführt. Details zur Reaktionsführung und zur Aufarbeitung der Produkte werden z.B. von J.M. Lamberts, D.C. Webster und J.E. McGrath in Polymer Preprints, Vol. 25 (2), 1984, S. 14 angegeben.

Anzahl und Abfolge der Blöcke A und B in den erfindungsgemäßen Polyester/Polysulfon-Blockcokondensaten werden durch die Reaktionsführung sowie die Struktur von A und B bestimmt. Monohydroxylterminierte Polysulfonblöcke B resultieren vorwiegend in BAB-Blockcopolymeren, dihydroxylterminierte Polysulfonblöcke B vorwiegend in $(AB)_n$-Typen. Werden zum Aufbau der Polyesterblöcke A ausschließlich Hydroxycarbonsäuren eingesetzt, sind mit monohydroxylterminierten Blöcken BAB-Blockcopolykondensate, mit dihydroxylterminierten Blöcken B hingegen vorwiegend ABA-Typen zugänglich.

Die Blöcke A und B sind in den erfindungsgemäßen Blockkondensaten chemisch miteinander verknüpft. Die Verknüpfung erfolgt vorzugsweise durch Estergruppen, die durch Reaktion der phenolischen Hydroxylgruppen der Polysulfonblöcke B mit Carboxylgruppen der bereits gebildeten oder im Aufbau befindlichen Polyesterblöcke A entstehen. Ein Beweis für die chemische Verknüpfung der Blöcke A und B und damit eine Unterscheidung zwischen den erfindungsgemäßen Blockcokondensaten und einer bloßen Mischung aus Polyester-und Polysulfonblöcken kann analytisch durch selektive Extraktion geführt werden. Hierbei wird eine fein zerteilte Probe des betreffenden Produktes in einer Soxhlet-Extraktionsapparatur über einen Zeitraum von mehreren Tagen erschöpfend mit einem Lösungsmittel extrahiert, das nur Polysulfone, nicht jedoch thermotrope Polyester des eingesetzten Typs löst. Während aus einer bloßen Mischung eines Polysulfons mit einem thermotropen Polyester unter diesen Bedingungen der Polysulfonanteil quantitativ extrahiert werden kann, sind aus den erfindungsgemäßen Blockcokondensaten weniger als 50 %, bevorzugt jedoch weniger als 10 % der enthaltenen Polysulfonanteile extrahierbar. Geeignete Lösungsmittel zur selektiven Extraktion lösen die Polysulfonblöcke V, nicht jedoch die aus wiederkehrenden Einheiten der Formeln III und IV aufgebauten Polyesterblöcke. Ein geeignetes Lösungsmittel zur selektiven Extraktion von Blockkondensaten mit Polysulfonblöcken der Formel V b ist beispielsweise Benzol.

Die erfindungsgemäßen Polyester/Polysulfon-Blockcokondensate besitzen in der Regel eine inhärente Viskosität von mindesten 0,5, vorzugsweise von mindestens 1,0 dl/g (gemessen an einer Lösung von 5 mg Blockcokondensat/ml p-Chlorphenol bei 45°C). Sollten Blockcokondensate in p-Chlorphenol unlöslich sein, wird angenommen, daß sie die angegebene Mindestviskosität besitzen; sie sind somit erfindungsgemäß, sofern sie den Parametern des Hauptanspruchs genügen.

Die erfindungsgemäßen Polyester/Polysulfon-Blockcokondensate besitzen vorzugsweise eine Schmelzviskosität von weniger als 1000 Pa•s, gemessen bei einer Schergeschwindigkeit von $10^3 s^{-1}$ unter Verwendung einer Düse mit einem Länge/Durchmesser-Verhältnis von 20 bei einer Temperatur von weniger als 400°C, vorzugsweise weniger als 350°C.

Die erfindungsgemäßen Polyester/Polysulfon-Blockcokondensate zeigen - ähnlich wie thermotrope Polyester - ein ausgeprägt strukturviskoses Verhalten. Ihre Schmelzviskosität ist in starkem Maße von einwirkenden Scherkräften abhängig, wobei eine Erhöhung der Scherkräfte zu einem Abfall der Viskosität führt.

Die erfindungsgemäßen Polyester/Polysulfon-Blockcokondensate können nach verschiedenen Verfahren durch Umesterung der in einer Vorstufe erhaltenen hydroxylendgruppenhaltigen Polysulfonblöcke der Formel V bzw. ihrer reaktiven Derivate mit den zum Aufbau der wiederkehrenden Einheiten der Formeln III und/oder IV geeigneten Hydroxycarbonsäuren, Dicarbonsäuren und Dihydroxyverbindungen bzw. ihrer reaktiven Derivate und anschließende Polykondensation hergestellt werden.

Beispiele für bevorzugte reaktive Derivate der genannten Ausgangsverbindungen sind ihre Acylester, ihre Arylester und ihre Säurechloride.

Nach einem bevorzugten Syntheseverfahren werden die niederen Acylester, vorzugsweise die Acetate der hydroxylendgruppenhaltigen Polysulfonblöcke der Formel V und der zum Aufbau der wiederkehrenden Einheiten der Formeln III und/oder IV geeigneten Hydroxycarbonsäuren und Dihydroxyverbindungen mit den entsprechenden Dicarbonsäuren umgesetzt, wobei die Acylester auch in situ hergestellt werden können.

Nach einem anderen bevorzugten Syntheseverfahren werden die Arylester, vorzugsweise die Phenylester der zum Aufbau der wiederkehrenden Einheiten der Formeln III und/oder IV geeigneten Hydroxycarbonsäuren und Dicarbonsäuren mit den entsprechenden Dihydroxyverbindungen und den hydroxylendgruppenhaltigen Polysulfonblöcken der Formel V umgesetzt, wobei die Arylester auch in situ hergestellt werden können.

Diese Reaktion können in der Schmelzphase durchgeführt werden; möglich ist jedoch auch die Reaktion in Gegenwart eines flüssigen wärmeüberleitenden Mediums, das einen hohen Siedepunkt hat.

Die hydroxylendgruppenhaltigen Polysulfonblöcke der Formel V und die zum Aufbau der wiederkehrenden Einheiten der Formel III und/ oder IV geeigneten Hydroxycarbonsäuren, Dicarbonsäuren und Dihydroxyverbindungen werden im Verhältnis der Ausgangskomponenten in die thermotropen Blockcopolykondensate eingebaut.

Es kann zweckmäßig sein, sowohl die Kondensations-bzw. Umesterungsreaktion als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titan tetrapropylat, Alkoxytitansilikate, Zirkoniumbutylat, Zirkoniumpropylat, Titantetraphenolat, Natriumphenolat, Germaniumdioxid, Antimontrioxid, Dialkyl-und Diarylzinnoxid, Di-butylzinn-dicacetat, Di-butyl-dimethoxyzinn. Besonders bevorzugt sind Magnesium-, Mangan-, Natrium-, Kalium-und Zinkacetat.

Die Katalysatormengen betragen vorzugsweise 0,001 - 1, insbesondere 0,01 - 0,2 Gew.-%, bezogen auf das Gesamtgewicht der eingesetzten Monomeren.

Die erfindungsgemäßen Polyester/Polysulfon-Blockcokondensate können bei Temperaturen von 160 -400° C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann - vorzugsweise in Granulatform - einer Festphasennachkondensation unter vermindertem Druck bei Temperaturen von 200 - 300° C unterworfen werden; nach 1 - 25 h haben sich das Molekulargewicht erhöht und die daraus resultierenden Eigenschaften der Polyester/Polysulfon-Blockcokondensate merklich verbessert.

Weiterer Gegenstand der Erfindung ist also ein Verfahren zur Herstellung der neuen Polyester/Polysulfon-Blockco kondensaten durch Umsetzung in einer Vorstufe erhaltener hydroxylendgruppenhaltiger Polysulfonblöcke der Formel V bzw. ihrer reaktiven Derivate, die auch in situ hergestellt werden können, mit den zum Aufbau der wiederkehrenden Einheiten der Formeln III und/oder IV geeigneten Hydroxycarbonsäuren, Dicarbonsäuren und Dihydroxyverbindungen bzw. ihrer reaktiven Derivate, die auch in situ hergestellt werden können, ggf. in Gegenwart von Verzweigungsmitteln und Katalysatoren, bei Temperaturen von 160 - 400° C, ggf. unter vermindertem Druck.

Die erfindungsgemäßen Blockcopolykondensate besitzen hervorragenden E-Modul und hervorragende Festigkeit, gute Verarbeitbarkeit, gute Dimensionstabilität, hohe Chemikalienbeständigkeit, hohe Brandwidrigkeit, hohe Wärmeformbeständigkeit, gutes Kriechverhalten, gute dielektrische Eigenschaften, hohe Reißdehnung und hohe hydrolytische Beständigkeit.

Aufgrund der geschilderten Eigenschaften eignen sich die erfindungsgemäßen Polyester/Polysulfon-Blockcokondensate bevorzugt zur Herstellung von

-elektrotechnischen Artikeln, wie z.B. Isolatoren, gedruckten Schaltungen, Steckkontakten, Armaturenteilen, Umhüllungen für integrierte Schaltungen

-Umhüllungen für Lichtwellenleiter

-Membranen

-Teilen chemisch-technicher Anlagen, wie. z.B. Rohren, Behälterauskleidungen, Rotoren, Gleitlagern, Dichtungen

-Teilen der Flugzeuginnenausstattung

-Teilen medizinisch technischer Geräte, wie z.B. Bauteilen von Klimaanlagen, Ventilteilen.

Weiterhin sind die erfindungsgemäßen Polyester/Polysulfon-Blockcokondensate hervorragend als Modifikatoren für Mischungen aus thermotropen Polyestern und Polysulfonen geeignet. Bereits durch Beimischung geringer Blockcokondensatanteile lassen sich wichtige Eigenschaften, wie z.B. die Zugfestigkeit, deutlich verbessern.

Die erfindungsgemäßen thermotropen Polyester/Polysulfon-Blockcokondensate können aber auch als Überzugs-und Beschichtungsmaterial (pulverförmig oder dispergiert) verwendet werden. Auch zur Herstellung verstärkter oder gefüllter Formmassen mit einem Verstärker-bzw. Füllstoffgehalt von 5 - 65 Gew.-%, bezogen auf verstärkte bzw. gefüllte Formmasse, sind sie bestens geeignet.

Weiterer Gegenstand der Erfindung ist also die Verwendung der neuen Blockcopolymerisate zur Herstellung von Formkörpern, Filamenten, Fasern und Filmen.

Herstellung eines dihydroxylfunktionellen Polysulfonblocks

In einen 3-1-Dreihalkolben mit KPG-Rührer, Stickstoffeinleitung, Innenthermometer und Wasserabscheider mit Rückflußkühler wurden unter Stickstoffatmosphäre die folgenden Substanzen eingetragen:
0,8 mol = 230 g 4,4'-Dichlordiphenylsulfon
1,0 mol = 228 g Bisphenol A
1200 ml N-Methylpyrrolidon (wasserfrei)
600 ml Toluol (wasserfrei).

Die Mischung wurde mittels Ölbad auf 50° C Innentemperatur erwärmt und zu der klaren Lösung 1,3 mol = 180 g Kaliumcarbonat (wasserfrei) gegeben. Durch Erhitzen im Rückfluß wurde über einen Zeitraum von 6 h die Hauptmenge entstehenden Wassers abdestilliert. Durch Abnahme von 500 ml Toluol wurde die Siedetemperatur auf 180° C erhöht und während 16 h die Umsetzung vervollständigt. Die Reaktionsmischung wurde abgekühlt, nach Absaugen ausgefallener Salze mit Essigsäure auf pH 4-5 eingestellt und durch Eintropfen in 13 l Methanol ausgefällt. Das weiße, pulverförmige Produkt wurde abgesaugt, mit 6 l warmen Wasser gewaschen, mit Methanol nachgewaschen und getrocknet.
Ausbeute: 349,5 g = 88 % der Theorie
Fp = 147-163° C
$\overline{M}_n$ (osm) = 2010 g/mol

Das so hergestellte Produkt wird im folgenden als OS 2000 bezeichnet.

Beispiele

Die Prüfung der Schlagzähigkeit $a_n$ und Kerbschlagzähigkeit $a_k$ erfolgte an Normkleinstäben gemäß DIN 53 453 (ISO/R 179) bei 23° C jeweils an 10 Prüfkörpern. Die Zugfestigkeit wurde gemäß DIN 53 455 (ISO/R 527), der Zug-E-Modul gemäß DIN 53 457 gemessen. Die Bestimmung der Wärmeformbeständigkeit erfolgte durch Messung der Vicat B-Erweichungstemperatur gemäß DIN 53 460 (ISO 306).

Beispiel 1

In einen 100 ml Zweihalskolben mit KPG-Rührer, Stickstoffeinleitung und Kondensationsaufsatz wurden die folgenden Substanzen eingewogen:
33,7 mmol = 4,65 g p-Hydroxybenzoesäure
17,7 mmol = 2,93 g Isophthalsäure
2,6 mmol = 0,43 g Terephthalsäure
15,6 mmol = 1,71 g Hydrochinon
2,6 mmol = 0,48 g 4,4'-Dihydroxydiphenyl
2,1 mmol = 4,22 g dihydroxylfunktionelles Polysulfon OS 2000
89,2 mmol = 9,11 g Essigsäureanhydrid
5 mg Magnesiumacetat
5 mg Gemaniumdioxid

Die Reaktionsmischung wurde unter Stickstoffatmosphäre mittels Salzbad aufgeschmolzen und bei 180° C 3 h refluxiert. Anschließend wurde über einen Zeitraum von 3 h die Temperatur stufenweise auf 300° C angehoben, wobei die Hauptmenge der entstehenden Essigsäure und des im Überschuß vorhandenen Acetanhydrids abdestillierten. Im Verlauf von 1,5 h wurde die Umsetzung durch weitere Anhebung der Temperatur auf 345° C und gleichzeitig Absenkung des Druckes bis auf 18 mbar vervollständigt. Es bildete sich eine beigefarbene hochviskose Schmelze, die beim Abkühlen zu einem zähen Festkörper erstarrte.

Das Reaktionsprodukt war in p-Chlorphenol nicht vollständig löslich. Durch Polarisationsmikroskopie wurde im Bereich von 330° C bis zur beginnenden Zersetzung bei 470° C eine flüssigkritalline Phase nachgewiesen.

Bei differentialkalorimetrischer Untersuchung (DSC) wurden 2 Glasübergangstemperaturen beobachtet:
$T_G^1$ = 120° C
$T_G^2$ = 185° C

Durch Vergleich mit den Glasübergangstempertauren des entsprechenden reinen LC-Polyesters ($T_G$ = 125° C) bzw. reinen Polysulfons ($T_G$ = 190° C) konnte $T_G{}^1$ einer Polyester-und $T_G{}^2$ einer Polysulfonphase zugeordnet werden. Das Produkt weist mithin eine zweiphasige Morphologie auf.

5 g des gemahlenen Reaktionsproduktes wurden in einer Soxhlet-Extraktionsapparatur über 72 h erschöpfend mit Benzol extrahiert. Nach Einrotieren und Trocknen des Extraktes wurden 0,15 g (= 3 % der Gesamtmenge bzw. 10 % des Polysulfonanteils) eines Produktes erhalten, das lt. IR-Spektrum Polysulfonstruktur aufwies. Die Hauptmenge des eingesetzten Polysulfons war mithin ins Blockcokondensat eingebaut worden.

Beispiele 2 und 3

In einer Apparatur, bestehend aus 1 l Planschliffgefäß mit Planschliffdeckel, KPG-Rührer, Stickstoffeinleitung und Kondensationsaufsatz wurden je 200 g der in Tabelle 1 aufgeführten Blockcokondensate nach dem in Beispiel 1 beschriebenen Temperatur/Zeit-Programm hergestellt. Im Unterschied zu Beispiel 1 wurden die Produkte im Anschluß an die Schmelzpolykondensation gemahlen und 18 h bei einer Temperatur von 240° C im Vakuum festphasennachkondensiert. Die nachkondensierten Produkte waren in p-Chlorphenol unlöslich und wiesen im Bereich zwischen 330° C (Beispiel 2) bzw. 340° C (Beispiel 3) und 400° C eine optisch anisotrope Schmelzphase auf.

Aus den thermotropen Blockcokondensaten wurden durch Spritzguß bei 370° C Prüfkörper hergestellt und charakterisiert. Die in Tabelle 1 zusammengestellten Prüfergebnisse demonstrieren, daß die Blockcokondensate eine vorteilhafte Eigenschaftskombination aus hoher Steifigkeit und hoher Wärmeformbeständigkeit aufweisen, die mit den zum Vergleich angeführten entsprechenden thermotropen Polyestern bzw. Polysulfonen allein nicht erreicht werden kann.

**Tabelle 1** Eigenschaften thermotroper Polyester/Polysulfon-Blockcokondensate

| Beispiel | Gewichtsanteile/% Polyester 1) | Polysulfon 2) | $\eta_{rel}$ 3) | Zug-E-Modul | Vicat B-Temperatur |
|---|---|---|---|---|---|
| 2 | 90 | 10 | 1,80 | 12 100 | 156 |
| 3 | 70 | 30 | 1,66 | 9 160 | 161 |
| Vergleich 1 | 100 | 0 | 1,78 | 19 800 | 132 |
| Vergleich 2 4) | 0 | 100 | - | 2 680 | 184 |

1) Zusammensetzung:

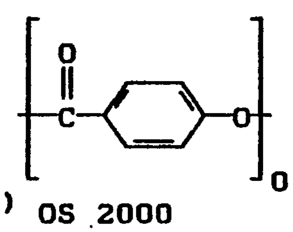
0,65

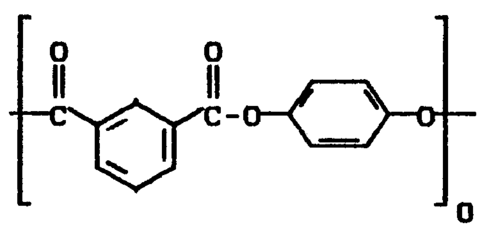
0,30

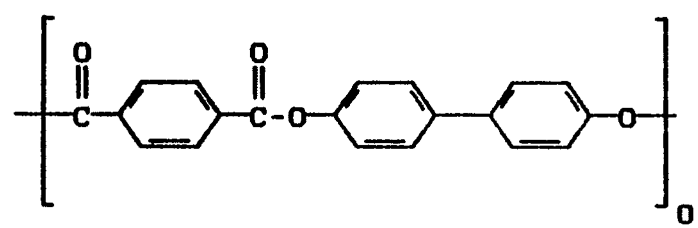
0,05

2) OS 2000

3) relative Lösungsviskosität des nicht nachkondensierten Materials (LM: p-Chlorphenol, c = 5/g, T = 45° C)

4) Polysulfon UDEL R P 1700 der UCC

Beispiel 4

In ein 1 l Planschliffgefäß mit Planschliffdeckel, KPG-Rührer, Stickstoffeinleitung und Kondensationsaufsatz wurden die folgenden Substanzen eingewogen:
0,396 mol = 54,65 g p-Hydroxybenzoesäure
0,198 mol = 37,21 g 6-Hydroxynaphthalsäure
3,94 mmol = 0,65 g Terephthalsäure
3,94 mmol = 38,61 g dihydroxylendgruppenhaltiges Polysulfon (Struktur wie OS 2000; $\overline{M}_n$ = 9800 g/mol)
0,722 mol = 73.74 g Essigsäureanhydrid
50 mg Magnesiumacetat
50 mg Germaniumdioxid

Die Reaktionsmischung wurde unter Stickstoffatmosphäre mittels Salzbad aufgeschmolzen und bei 200° C zwei Stunden refluxiert. Innerhalb von je 1 h wurde die Temperatur auf 230, 280 und schließlich 350° C angehoben, wobei die Hauptmenge der entstehenden Essigsäure sowie überschüssiges Acetanhydrid abdestillierten. Im Verlauf von weiteren 30 min wurde die Umsetzung durch stufenweise Absenkung des Druckes bis auf 12 mbar vervollständigt (Gesamtdestillatmenge: 83,3 g = 98,5 %). Das erhaltene Reaktionsprodukt wurde gemahlen und 18 h bei 240° C im Vakuum festphasennachkondensiert. Das Produkt der Nachkondensation war in p-Chlorphenol unlöslich und wies im Bereich zwischen 260 und 400° C eine optisch anisotrope Phase auf. Eine Benzolextraktion analog Beispiel 1 ergab 4 % extrahierbare Anteile, d.h. etwa 87 % des eingesetzten Polysulfons wurden ins Blockcokondensat eingebaut.

Beispiele 5 und 6

Das in Beispiel 4 beschriebene Blockcokondensat wurde als Modifikator für Mischungen aus thermotropen Polyestern und Polysulfonen geprüft. Hierzu wurden mit einem kontinuierlich arbeitenden Collin-Kneter bei einer Temperatur von 330° C die in Tabelle 2 aufgelisteten Compounds hergestellt, durch Spritzguß bei 340° C zu Prüfkörpern verarbeitet und charakterisiert.

Man erkennt, daß bereits durch Modifikation mit geringen Mengen des thermotropen Blockcokondensates Festigkeit und Wärmeformbeständigkeit der Polyester/Polysulfon-Mischung wesentlich verbessert wurden.

**Tabelle 2** Einfluß erfindungsgemäßer Modifikatoren auf Eigenschaften von Polyester/Polysulfon-Blends

| Beispiel | Gewichtsanteile Polyester[1] | Gewichtsanteile Polysulfon[2] | Modifikator | $a_n/a_k$ ($kJ/m^2$) | Zug-E-Modul (MPa) | Zugfest. | Vicat B-Temp. (°C) |
|---|---|---|---|---|---|---|---|
| 5 | 69 | 30 | 1 | 6/4 | 8840 | 111 | 154 |
| 6 | 66 | 29 | 5 | 6/5 | 9020 | 117 | 152 |
| Vergleich 3 | 70 | 30 | 0 | 6/3 | 8910 | 97 | 148 |

1) Zusammensetzung:

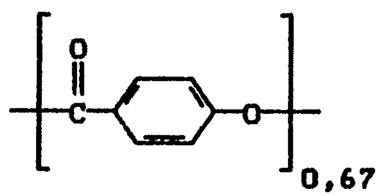

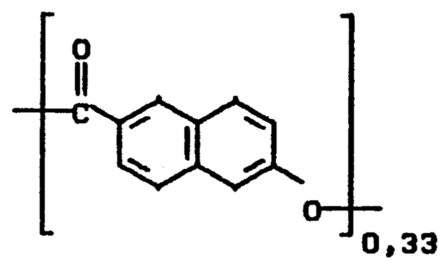

2) UDEL R P 1700 der UCC

## Ansprüche

1. Thermotrope aromatische Polyester/Polysulfon-Blockcokondensate der Formeln
$(A-B)_a A_b$ (I) oder $(B-A)_a B_b$ (II),
wobei a eine ganze Zahl zwischen 1 und 1000 und b entweder 0 oder 1 ist, mit der Maßgabe, daß die Blöcke A und B chemisch miteinander verknüpft sind,
das Verhältnis A/B 99:1 bis 1:99 beträgt,
und
A ein thermotroper aromatischer Polyesterblock, bestehend aus wiederkehrenden Einheiten der Formeln

$$-\overset{\overset{O}{\|}}{C}-Ar^1-O- \quad (III)$$

und/oder

$$-\overset{\overset{O}{\|}}{C}-Ar^2-\overset{\overset{O}{\|}}{C}-O-Ar^3-O- \quad (VI)$$

ist, worin $Ar^1$, $Ar^2$ und $Ar^3$ 6 - 18 C-Atome enthaltende bivalente aromatische Reste, deren kettenverlängernde Bindungen zu 50 - 100 Mol-% coaxial oder parallel entgegengesetzt und zu 0-50 Mol-% gewinkelt sind und die durch $C_1$-$C_4$-Alkoxygruppen oder Halogenatome substituiert sein können, darstellen
und
B ein Polysulfonblock, bestehend aus wiederkehrenden Einheiten der Formel

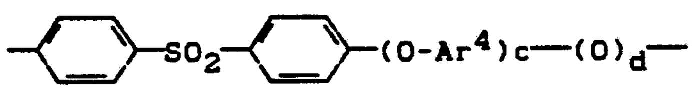

(V)

ist, worin $Ar^4$ ein aus einem oder mehreren, ggf. durch Alkylidengruppen oder Heteroatome verbrückten aromatischen Ringen bestehender bivalenter Rest ist, c und d unabhängig voneinander 0 oder 1 sind, mit der Maßgabe, daß die Blöcke B vor Einbau in das Blockcokondensat eine oder zwei Hydroxylendgruppen tragen.

2. Blockcokondensate nach Anspruch 1, dadurch gekennzeichnet, daß die Blöcke A und B durch Estergruppen verknüpft sind.

3. Blockcokondensate nach Ansprüchen 1 und 2, dadurch gekennzeichnet, daß $Ar^1$ zu 50-100 Mol-% aus 1,4-Phenylenresten besteht.

4. Blockcokondensate nach Anspruch 3, dadurch gekennzeichnet, daß Block A ausschließlich aus wiederkehrenden Einheiten der Formel III besteht, wobei $Ar^1$ 50-0 Mol-% 2,6-Naphthylenreste enthält.

5. Blockcokondensate nach Anspruch 3, dadurch gekennzeichnet, daß $Ar^1$ ausschließlich aus 1,4-Phenylenresten, $Ar^2$ zu 50-100 Mol-% aus 1,3-Phenylenresten und zu 0-50 Mol-% aus 1,4-Phenylenresten, $Ar^3$ zu 50-100 Mol-% aus 1,4-Phenylenresten und zu 0-50 Mol-% aus 4,4'-Biphenylenresten besteht und das Verhältnis der wiederkehrenden Einheiten III/IV 1-3 ist.

6. Blockcokondensate nach Anspruch 3, dadurch gekennzeichnet, daß $Ar^1$ und $Ar^2$ ausschließlich aus 1,4-Phenylenresten bestehen, $Ar^3$ ausschließlich aus 4,4'-Biphenylenresten besteht und das Verhältnis der wiederkehrenden Einheiten III/IV 0,5-2 ist.

7. Blockcokondensate nach Ansprüchen 1-6, dadurch gekennzeichnet, daß Block B aus wiederkehrenden Einheiten der Formel

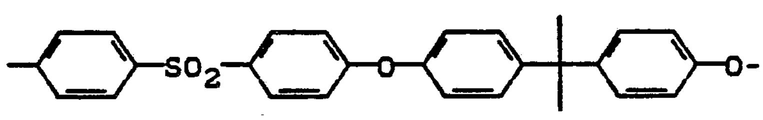

besteht.

8. Blockcokondensate nach Ansprüchen 1-6, dadurch gekennzeichnet, daß Block B aus wiederkehrenden Einheiten der Formel

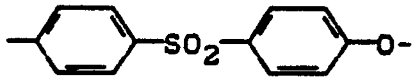

besteht.

9. Verfahren zur Herstellung der thermotropen Polyester/Polysulfon-Blockcokondensate gemäß Ansprüchen 1-8 durch Umsetzung der in einer Vorstufe erhaltenen hydroxylendgruppenhaltigen Polysulfonblöcke der Formel V bzw. ihrer reaktiven Derivate, die auch in situ hergestellt werden können, mit den zum Aufbau der wiederkehrenden Einheiten der Formeln III und/oder IV geeigneten Hydroxycarbonsäuren, Dicarbonsäuren und Dihydroxyverbindungen bzw. ihrer reaktiven Derivate, die auch in situ hergestellt werden können, gegebenenfalls in Gegenwart von Verzweigungsmitteln und Katalysatoren, bei Temperaturen von 160-400° C, gegebenenfalls unter vermindertem Druck, worauf sich gegebenenfalls eine Festphasenkondensation anschließt.

10. Verwendung der Polyester nach Ansprüchen 1-8 zur Herstellung von Fasern, Filmen und Formkörpern.